# EUROPÄISCHE PATENTSCHRIFT

(11) **EP 1 645 203 B1**
(45) Veröffentlichungstag und Bekanntmachung des Hinweises auf die Patenterteilung: **31.10.2007**
(21) Anmeldenummer: 05006362.7
(22) Anmeldetag: 23.03.2005
(51) Int. Cl.: A43B 13/12, B29D 31/518, A43B 13/14, A43B 23/22

(54) **Schuhsohle**
Shoe sole
Semelle de chaussure

(30) Priorität: 09.10.2004 DE 102004049369
(43) Veröffentlichungstag der Anmeldung: 12.04.2006
(73) Patentinhaber: Caprice Schuhproduktion GmbH & Co. KG, 66955 Pirmasens (DE)
(72) Erfinder: Cölsch, Kurt, 66954 Pirmasens (DE)
(74) Vertreter: Patentanwälte Möll und Bitterich

(56) Entgegenhaltungen:
- EP-A- 0 799 583
- WO-A-95/27416
- FR-A- 2 742 637
- US-A- 5 720 118
- US-A1- 2005 034 328

## Beschreibung

Die Erfindung betrifft Schuhsohlen gemäß dem Oberbegriff des Anspruchs 1.

Schuhe werden seit Jahrhunderten weltweit in großen Stückzahlen und in den unterschiedlichsten Macharten hergestellt. Gleichwohl erfordert die Schuhherstellung noch immer viel Handarbeit, insbesondere wenn Leder, Textilien und andere natürliche Materialien verwendet werden. Die Literatur enthält daher eine Unzahl von Vorschlägen, die die Schuhherstellung vereinfachen, beschleunigen und letztlich verbilligen sollen. Viele dieser Vorschläge waren nicht realisierbar, andere wurden von der technischen Entwicklung überholt.

Von der chemischen Industrie wurden in den letzten Jahrzehnten viele neue Materialien entwickelt, insbesondere Kunststoffe und Klebstoffe, die teilweise auch Eingang in die Schuhherstellung gefunden haben. Gleichwohl bestehen noch erhebliche Einsparpotentiale, vorausgesetzt es gelingt, diese Materialien in geeigneter Weise zu kombinieren.

Aus der Druckschrift EP 0 799 583 ist eine Schuhsohle bekannt welche die Grundlage für den Oberbegriff des Anspruchs 1 bildet.

Der vorliegenden Erfindung liegt die Aufgabe zugrunde, eine Schuhsohle der eingangs genannten Art anzugeben, die praktisch ohne Handarbeit und damit einfach, schnell und preiswert hergestellt werden kann, die die gleichen Laufeigenschaften bietet wie eine herkömmliche Sohle und die die Schuhherstellung insgesamt beschleunigt.

Diese Aufgabe wird gelöst durch eine Schuhsohle mit den Merkmalen des Anspruchs 1.

Die erfindungsgemäße Schuhsohle besteht aus mehreren Komponenten, die jeweils mit geeigneten Kunststoffen hergestellt sind, wobei diese Herstellung halb- oder vollautomatisch in geeigneten Spritz- oder Gießformen erfolgt. Dank der formschlüssigen Verbindung zwischen Gelenk und Laufsohle spielt die Frage, ob die jeweils verwendeten Kunststoffe zueinander passen, keine Rolle, so dass bei der Materialauswahl große Freiheiten bestehen. Letztlich erhält der Schuhhersteller vom Sohlenhersteller eine komplett fertige Laufsohle, auf der er nur noch den inzwischen hergestellten Schaft befestigen muss.

Gemäß einer Ausgestaltung der Erfindung wird die formschlüssige Verbindung dadurch realisiert, dass das Gelenk eine Anzahl von Bohrungen mit endseitiger Ansenkung besitzt. Beim Formspritzen der Laufsohle dringt das Sohlenmaterial in diese Bohrungen und Ansenkungen ein und verankert sich dort.

Vorteilhafterweise besteht die Laufsohle aus einem in Formen spritzgießfähigen Kunststoffmaterial, insbesondere PU, PUR oder auch TR.

Das Gelenk besteht vorteilhafterweise aus einem duroplastischen Kunststoffmaterial, vorzugsweise verstärkt mit Glas- oder Kohlenstofffasern.

Um die Stabilität der Schuhsohle im Gelenkbereich zu erhöhen, besteht die Möglichkeit, die Unterseite der Laufsohle konvex zu wölben.

Alternativ oder auch in Kombination hierzu kann das Gelenk selbst in Querrichtung gewölbt ausgebildet werden. Eine solche schalenartige Form besitzt eine hohe Formstabilität.

Schließlich besteht auch die Möglichkeit, in das Gelenk eine herkömmliche Stahlfeder zu integrieren.

Anhand der Zeichnung soll die Erfindung in Form eines Ausführungsbeispiels näher erläutert werden. Es zeigen jeweils rein schematisch
- Fig. 1: einen Schnitt entlang der Linie I-I in Fig. 2 durch ein Gelenk,
- Fig. 2: eine Draufsicht auf das Gelenk der Fig. 1 und
- Fig. 3: eine Seitenansicht einer Schuhsohle, hergestellt unter Verwendung des Gelenks der Fig. 1 und 2.

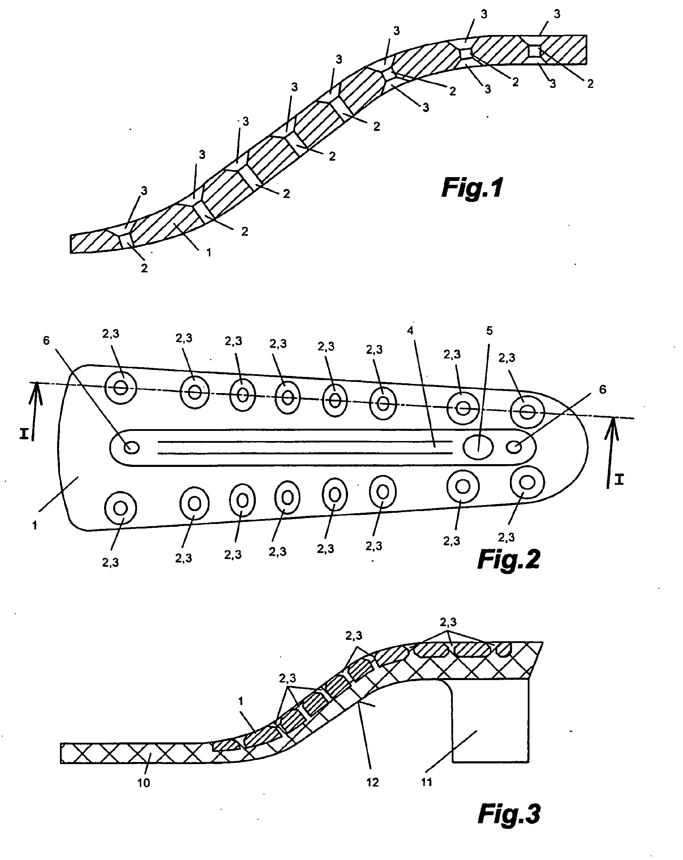

Fig. 1 als Schnitt und Fig. 2 als Draufsicht zeigen ein Gelenk 1, mit dessen Hilfe aus Kunststoff gespritzte Schuhsohlen im Gelenkbereich stabilisiert werden. Das Gelenk 1 besteht aus einem harten, beispielsweise duroplastischen Kunststoff, der gegebenenfalls mit Glas- oder Kohlenstofffasern verstärkt ist. Das Gelenk 1 ist, angepasst an den damit herzustellenden Schuh, anatomisch geformt. Randseitig besitzt es eine Anzahl von Bohrungen 2, die endseitig Ansenkungen 3 besitzen.

Derartige Ansenkungen können wie in der Zeichnung dargestellt einseitig oder beidseitig vorgesehen sein.

Wie Fig. 2 zeigt, kann in das Gelenk 1 bei Bedarf auch eine herkömmliche Stahlfeder 4 integriert werden, wobei sowohl die Stahlfeder 4 als auch das Gelenk 1 mit einer Bohrung 5 für eine bei hohen Absätzen benötigte Absatzschraube versehen sein kann. Die in den herkömmlichen Stahlfedern benötigten Nietlöcher 6 dienen hier dazu, die Stahlfeder in der Gießform für das Gelenk 1 zu befestigen. Die Stahlfeder 4 selbst ist komplett in das Gelenkmaterial integriert.

Fig. 3 zeigt schematisch eine Seitenansicht einer Schuhsohle. Sie besteht aus einer Laufsohle 10, unter der bereits ein Absatz 11 montiert ist. Das Laufsohlenmaterial ist in die Bohrungen 2 und die Ansenkungen 3 eingedrungen, wodurch Laufsohle 10 und Gelenk 1 formschlüssig verankert sind.

Das Gelenk 1 kann nicht nur wie in der Figur dargestellt eben, sondern auch in Querrichtung gewölbt gefertigt werden. Die dadurch erreichbare hohe Formstabilität ermöglicht die Herstellung des Gelenks 1 auch ohne Stahlfeder 4 und gegebenenfalls auch ohne Faserverstärkung.

Die wie in Fig. 3 dargestellte fertige Schuhsohle wird in einem einzigen Arbeitsgang auf einen eingeleisteten Schuhschaft montiert, vorzugsweise geklebt. Dabei können sowohl gezwickte als auch gestrobelte oder kombinierte Schuhschäfte verwendet werden.

## Patentansprüche

1. Schuhsohle für Schuhe, umfassend
- eine Laufsohle (10)aus einem in Formen spritzgießfähigen Kunststoffmaterial
- und ein Gelenk (1),
-- bestehend aus einer stabilen Kunststoffplatte,
-- mit Einrichtungen für eine formschlüssige Verbindung mit der Laufsohle (10) in Form von Bohrungen (2)
-- und mit der Laufsohle (10) vergossen
**gekennzeichnet durch** die Merkmale:
- dasGelenk(1)
-- ist anatomisch geformt,
-- besitzt eine integrierte Stahlfeder (4)
-- und ist mit der Laufsohle (10) oberflächengleich verankert,
- die Schuhsohle ist für Schuhe mit hohen Absätzen (11) bestimmt.

2. Schuhsohle nach Anspruche 1, **gekennzeichnet durch** das Merkmal:
- die Bohrungen (2) besitzen ein- oder beidseitig endseitige Ansenkungen (3).

3. Schuhsohle nach Anspruch 1 oder 2, **gekennzeichnet durch** das Merkmal:
- das Gelenk (1) ist in Querrichtung gewölbt.

4. Schuhsohle nach wenigstens einem der Ansprüche 1 bis 3, **gekennzeichnet durch** das Merkmal:
- das Gelenk (1) besteht aus einem duroplastischen Kunststoff.

5. Schuhsohle nach wenigstens einem der Ansprüche 1 bis 4, **gekennzeichnet durch** das Merkmal:
- das Gelenk (1) ist mit Glas- und/oder Kohlenstofffasern verstärkt.

6. Schuhsohle nach wenigstens einem der Ansprüche 1 bis 5, **gekennzeichnet durch** das Merkmal:
- das Gelenk (1) besitzt eine Bohrung (5) für eine Absatzschraube.

7. Schuhsohle nach wenigstens einem der Ansprüche 1 bis 6, **gekennzeichnet durch** das Merkmal:
- die Laufsohle besteht aus PU, PUR oder TR.

8. Schuhsohle nach wenigstens einem der Ansprüche 1 bis 7, **gekennzeichnet durch** das Merkmal:
- die Unterseite der Laufsohle (1) ist im Gelenkbereich (12) konvex gewölbt.

## Claims

1. A shoe sole for shoes, comprising:
- an outsole (10) consisting of a plastics material which can be injection moulded,
- and a shank (1),
- consisting of a stable plastics sheet,
- with means for a form-locking connection to the outsole (10) in the form of bores (2)
- and cast with the outsole (10)
**characterised by** the features:
- the shank (1)
- is anatomically shaped,
- has an integrated steel spring (4)
- and is anchored to the outsole (10) uniformly with the surface,
- the shoe sole is intended for shoes with high heels (11).

2. A shoe sole according to Claim 1, **characterised by** the feature:
- the bores (2) have end countersinking (3) at one end or both ends.

3. A shoe sole according to Claim 1 or 2, **characterised by** the feature:
- the shank (1) is curved in a transverse direction.

4. A shoe sole according to at least one of Claims 1 to 3, **characterised by** the feature:
- the shank (1) consists of a thermosetting plastic.

5. A shoe sole according to at least one of Claims 1 to 4, **characterised by** the feature:
- the shank (1) is reinforced with glass and/or carbon fibres.

6. A shoe sole according to at least one of Claims 1 to 5, **characterised by** the feature:
- the shank (1) has a bore (5) for a heel screw.

7. A shoe sole according to at least one of Claims 1 to 6, **characterised by** the feature:
- the outsole consists of PU, PUR or TR.

8. A shoe sole according to at least one of Claims 1 to 7, **characterised by** the feature:
- the underside of the outsole (1) is convexly curved in the shank portion (12).

## Revendications

1. Semelle pour chaussure, comportant :
- une semelle de marche (10) réalisée dans une matière plastique apte à être moulée par injection dans des moules,
- et un cambrion (1)
-- formé par une plaque en matière plastique stable,
-- comportant des dispositifs sous la forme de forures (2) pour un assemblage par emboîtement avec la semelle de marche (10),
-- et comportant la semelle de marche (10) moulée,
**caractérisée par** les caractéristiques :
- le cambrion (1)
-- est conçu avec une forme anatomique,
-- comporte un ressort en acier (4) intégré,
-- et est ancré à la semelle de marche (10) en étant situé à fleur avec la surface,
- la semelle de chaussure est destinée à des chaussures à talons (11) hauts.

2. Semelle de chaussure selon la revendication 1, **caractérisée par** la caractéristique :
- les forures (2) comportent des chanfreins (3) aux extrémités sur un côté ou sur les deux côtés.

3. Semelle de chaussure selon la revendication 1 ou 2, **caractérisée par** la caractéristique
- le cambrion (1) est cintré dans le sens transversal.

4. Semelle de chaussure selon au moins l'une des revendications 1 à 3, **caractérisée par** la caractéristique :
- le cambrion (1) est réalisé dans une matière plastique thermodurcissable.

5. Semelle de chaussure selon au moins l'une des revendications 1 à 4, **caractérisée par** la caractéristique :
- le cambrion (1) est renforcé par des fibres de verre et/ou des fibres de carbone.

6. Semelle de chaussure selon au moins l'une des revendications 1 à 5, **caractérisée par** la caractéristique :
- le cambrion (1) comporte une forure (5) pour une vis pour talon.

7. Semelle de chaussure selon au moins l'une des revendications 1 à 6, **caractérisée par** la caractéristique :
- la semelle de marche est réalisée en PU, PUR ou TR.

8. Semelle de chaussure selon au moins l'une des revendications 1 à 7, **caractérisée par** la caractéristique :
- la face inférieure de la semelle de marche (1) présente une courbure convexe dans la zone du cambrion (12).
